# EUROPÄISCHE PATENTANMELDUNG

(11) **EP 3 721 759 A1**
(43) Veröffentlichungstag der Anmeldung: **14.10.2020**
(21) Anmeldenummer: 20168668.0
(22) Anmeldetag: 08.04.2020
(51) Int. Cl.: A47J 31/52

(54) **VERFAHREN ZUM BETREIBEN EINES KAFFEEAUTOMATEN**

(30) Priorität: 11.04.2019 DE 102019205206
(71) Anmelder: BSH Hausgeräte GmbH, 81739 München (DE)
(72) Erfinder: Winkler, Gerhard, 83334 Inzell (DE); Reichel, Thomas, 83278 Traunstein (DE); Eder, Florian, 83132 Pittenhart (DE)

(57) **Zusammenfassung**

Die vorliegende Erfindung betrifft Verfahren zum Betreiben eines Kaffeeautomaten (1), bei dem nach einem Einschalten des Kaffeeautomaten (1) oder nach einem Wecken des Kaffeeautomaten (1) aus einem Stand-by-Modus an einer Anzeigeeinrichtung (2) eine Abfrage (3) nach einer Entleerung einer Tropfschale (4) und/oder eines Tresterbehälters (5) und/oder eine Abfrage (3) nach einer Entnahme einer Brüheinheit (6) angezeigt werden/wird.

Hierdurch kann auf eine aufwendige und teure Sensorik verzichtet werden.

## Beschreibung

Die vorliegende Erfindung betrifft ein Verfahren zum Betreiben eines Kaffeeautomaten. Die Erfindung betrifft außerdem einen Kaffeeautomaten mit einer Rechnereinrichtung die zur Durchführung eines solchen Verfahrens ausgebildet ist.

In modernen Kaffeevollautomaten ist üblicherweise eine Einrichtung vorgesehen, die einen Benutzer bei Bedarf an das Entleeren einer Tropfschale oder eines Tresterbehälters erinnert, um ein Überlaufen der Tropfschale bzw. des Behälters und die daraus resultierenden Betriebsstörungen vermeiden zu können.

Aus der EP 2 759 237 B1 ist eine Heißgetränkezubereitungseinrichtung mit einem Gehäuse und mit mindestens einem Ver- und/oder Entsorgungsbehälter bekannt, wobei zusätzlich eine Einrichtung zur Überprüfung einer Betätigung des Ver- und/oder Entsorgungsbehälters in der Heißgetränkezubereitungseinrichtung mit einem am Gehäuse angeordneten Prüfsegment vorgesehen ist, welches ein Schließelement und eine Steuerleitung mit einer Steuerspule umfasst. Das Schließelement öffnet bei entnommenem Ver- und/oder Entsorgungsbehälter. Zusätzlich vorgesehen ist ein Auslösesegment an dem Ver- und/oder Entsorgungsbehälter, wobei sich das Schließelement nur gemeinsam durch eine mit Strom beaufschlagte Steuerspule einerseits und durch das Auslösesegment andererseits schließen lässt. Hierdurch soll insbesondere auch ohne permanente Stromversorgung eine Überwachung einer möglichen Betätigung des oder der Ver- und/oder Entsorgungsbehälters erfolgen können, wobei zudem keine fehlerhaften Meldungen an den Nutzer der Getränkezubereitungseinrichtung nach ihrem Einschalten abgegeben werden.

Nachteilig bei den aus dem Stand der Technik bekannten Lösungen ist jedoch, dass hierfür üblicherweise ein zusätzlicher Sensor und/oder ein zusätzlich erforderliches Bauteil, wie beispielsweise ein Floater, erforderlich sind, die selbst und deren Verkabelung einen Kaffeeautomaten zusätzlich verteuern und die insbesondere kein Entnehmen bzw. Entleeren einer Tropfschale bzw. eines Tresterbehälters oder einer Brüheinheit im Stand-By-Modus erkennen.

Die vorliegende Erfindung beschäftigt sich daher mit dem Problem, ein Verfahren zum Betreiben eines Kaffeeautomaten anzugeben, mittels welchem die aus dem Stand der Technik bekannten Nachteile überwunden werden können.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Kaffeeautomaten mit einer entsprechenden Bedienlogik bzw. Abfragelogik auszustatten und allein über diese ein Entleeren eines Tresterbehälters bzw. einer Tropfschale und/oder ein Entnehmen einer Brüheinheit während und/oder nach einem Stand-By-Betrieb bzw. nach einem Einschalten des Kaffeeautomaten zu überwachen. Bei dem erfindungsgemäßen Verfahren wird somit nach einem Einschalten des Kaffeeautomaten oder nach einem Wecken desselben aus dem Stand-By-Modus an einer Anzeigeeinrichtung, beispielsweise einem Display, eine Abfrage nach einer Entleerung einer Tropfschale und/oder eines Tresterbehälters und/oder eine Abfrage nach einer Entnahme einer Brüheinheit angezeigt. Durch diese vergleichsweise einfache Bedienlogik kann ein jeweiliger Benutzer nach Inbetriebnahme des Kaffeeautomaten zur Überprüfung eines Füllzustandes eines Tresterbehälters bzw. einer Tropfschale aufgefordert werden, ebenso wie zur Entnahme und/oder Reinigung der Brüheinheit, wodurch insbesondere bisher erforderliche Sensoren, beispielsweise Reed-Sensoren und/oder Kappa-Sensoren, entfallen können, wodurch eine erhebliche konstruktive und damit auch monetäre Einsparung möglich ist. Insbesondere kann durch das erfindungsgemäße Verfahren auch auf bislang erforderliche Schwimmer bzw. Floater in der Tropfschale verzichtet werden, da der Kaffeeautomat gezielt fragt, wann die Tropfschale bzw. der Tresterbehälter nach dem Stand-By-Modus geleert wurden.

Zweckmäßig werden/wird nach einem Öffnen einer Gerätetür an der Anzeigeeinrichtung eine Abfrage nach einer Entleerung der Tropfschale und/oder des Tresterbehälters und/oder eine Abfrage nach der Entnahme der Brüheinheit angezeigt. Mittels eines derartigen Verfahrensschritts kann der Kaffeeautomat auch während des Betriebs hinsichtlich des Tresterbehälters bzw. der Tropfschale überwacht und gegebenenfalls ein Überlaufen derselben verhindert werden.

Bei einer weiteren vorteilhaften Ausführungsform der erfindungsgemäßen Lösung kann die Abfrage in einem Bedienmenü ausgeschaltet werden. Möchte ein jeweiliger Benutzer beispielsweise nicht nach jeder Inbetriebnahme an ein Entleeren der Tropfschale bzw. des Tresterbehälters bzw. eine Entnahme der Brüheinrichtung erinnert werden, so kann er dies in dem jeweiligen Bedienmenü einfach ausschalten. In diesem Fall kann mittels des erfindungsgemäßen Verfahrens ein Überlaufen der Tropfschale bzw. des Tresterbehälters unter Umständen nicht überwacht werden.

Zweckmäßig erscheint in der Anzeigeeinrichtung folgender Text als Abfrage: "Wurde im Stand-By-Modus die Tropfschale und/oder der Tresterbehälter geleert?" Zusätzlich oder alternativ kann auch folgender Text als Abfrage erscheinen: "Wurde im Stand-By-Modus die Brüheinheit entnommen?" Hierdurch wird dem jeweiligen Benutzer eine klare Fragestellung an die Hand gegeben, welcher er über ein zusätzliches an der jeweiligen Anzeigeeinrichtung angezeigtes "Ja"-Feld und "Nein"-Feld einfach beantworten kann. Selbstverständlich können die beiden Felder auch als Tasten an einem Rand der Anzeigeeinrichtung, beispielsweise des Displays, ausgebildet sein.

Bei einer weiteren vorteilhaften Ausführungsform der erfindungsgemäßen Lösung erfolgt bei einer Beantwortung der Abfrage nach der Entnahme der Brüheinheit mit einem "Nein" kein Initialisieren der Brüheinheit, wobei in diesem Fall beispielsweise eine Position der Brüheinheit vor dem Ausschalten des Kaffeeautomaten oder vor dem Stand-By-Modus weiter verwendet werden kann. Hierdurch kann ein deutlich schnelleres Hochfahren des Kaffeeautomaten erreicht werden, wodurch dieser schneller seine Betriebsbereitschaft erreicht und ein jeweiliger Nutzer schneller sein gewünschtes Getränk erhält.

Die vorliegende Erfindung beruht weiter auf dem allgemeinen Gedanken, einen Kaffeeautomaten mit einer Anzeigeeinrichtung und einer Rechnereinrichtung, die zur Durchführung des zuvor beschriebenen Verfahrens ausgebildet ist, anzugeben. Mittels eines derartigen Kaffeeautomaten, der zur Durchführung des beschriebenen Verfahrens ausgebildet ist, kann der Kaffeeautomat konstruktiv deutlich einfacher und damit kostengünstiger hergestellt werden, wobei zusätzlich eine Überwachung des Tresterbehälters bzw. der Tropfschale während des Stand-By-Modus bzw. dem ausgeschalteten Zustand möglich ist.

Bei einer vorteilhaften Weiterbildung der erfindungsgemäßen Lösung weist der Kaffeeautomat einen Türschalter auf, welcher mit der Rechnereinrichtung verbunden ist und über welchen die Rechnereinrichtung erkennen kann, ob die Tür geöffnet oder geschlossen ist. Hierdurch ist es beispielsweise möglich, bei eingeschaltetem Kaffeeautomat und nach einem Öffnen einer Gerätetür an der Anzeigeeinrichtung eine Abfrage nach einer Entleerung der Tropfschale und/oder des Tresterbehälters und/oder eine Abfrage nach der Entnahme der Brüheinheit anzuzeigen. Hierdurch ist eine Überwachung der zuvor genannten Komponenten auch während des eingeschalteten Zustands möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: einzelne Verfahrensschritte des erfindungsgemäßen Verfahrens und
- Fig. 2: eine Ansicht auf einen erfindungsgemäßen Kaffeeautomaten.

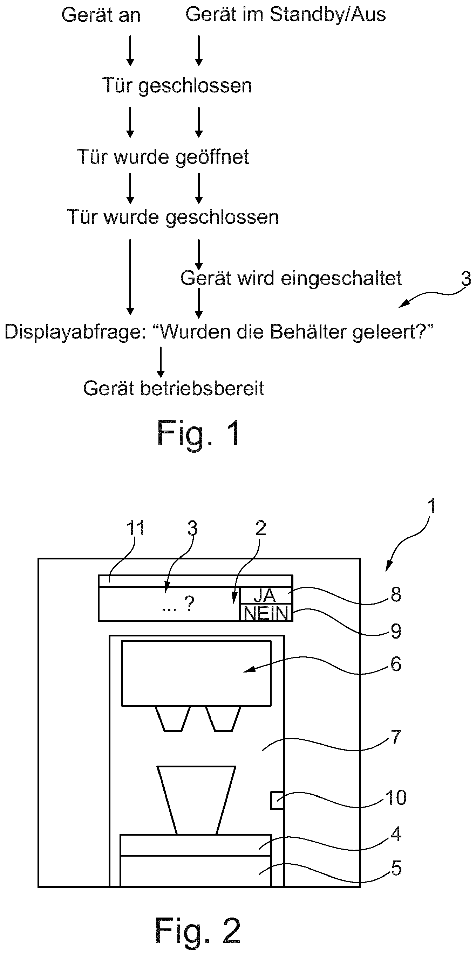

Entsprechend der Fig. 1 ist bereichsweise ein erfindungsgemäßes Verfahren zum Betreiben eines Kaffeeautomaten 1 (vgl. Fig. 2) gezeigt, bei welchem nach einem Einschalten des Kaffeeautomaten, hier mit "Gerät" bezeichnet, oder nach einem Wecken aus einem Stand-By-Modus an einer Anzeigeeinrichtung 2 eine Abfrage 3 nach einer Entleerung einer Tropfschale 4 und/oder eines Tresterbehälters 5 und/oder eine Abfrage 3 nach einer Entnahme einer Brüheinheit 6 angezeigt werden/wird. Gemäß der Fig. 1 kann sich beispielsweise der Kaffeeautomat 1 im Stand-By-Modus oder im ausgeschalteten Zustand, in welchem beispielsweise auch eine Gerätetür, hier "Tür" genannt, geschlossen und geöffnet wird, befinden, wobei sich anschließend nach einem Einschalten des Kaffeeautomaten 1 bzw. einem Wecken desselben aus dem Stand-By-Modus in der Anzeigeeinrichtung 2 die Abfrage 3 nach der Entleerung der Tropfschale 4 des Tresterbehälters 5 bzw. die Abfrage 3 nach der Entnahme der Brüheinheit 6 angezeigt werden.

Gemäß der Fig. 1 wurde dieser Verfahrensschritt als Displayabfrage bezeichnet und die Tropfschale 4 bzw. der Tresterbehälter 5 als Behälter. Zusätzlich ist es auch denkbar, dass bei eingeschaltetem Kaffeeautomat 1 nach einem Öffnen einer Gerätetür 7 an der Anzeigeeinrichtung 2 eine Abfrage 3 nach der Entleerung der Tropfschale 4 und/oder des Tresterbehälters 5 und/oder eine Abfrage 3 nach der Entnahme der Brüheinheit 6 angezeigt werden/wird. Mit dem erfindungsgemäßen Verfahren ist es somit möglich, direkt nach dem Einschalten bzw. Wecken des Kaffeeautomaten 1 und optional auch während des Betriebs den jeweiligen Benutzer an die Entleerung der Behälter 4, 5 bzw. der Entnahme der Brüheinheit 6 zu erinnern. Hierdurch ist es insbesondere möglich, bislang hierfür eingesetzte, aufwendige und damit auch teure, Sensoren einzusparen, die zudem keine Überwachung eines ausgeschalteten Zustandes bzw. eines Stand-By-Modus erlaubten.

Generell kann die Abfrage 3 selbstverständlich in einem speziellen Bedienmenü ausgeschaltet werden, sofern dies der jeweilige Benutzer wünscht. In diesem Fall wird er beim Wecken des Kaffeeautomaten 1 bzw. beim Einschalten desselben nicht mehr mit einer derartigen Abfrage 3 in der Anzeigeeinrichtung 2 konfrontiert.

In der Anzeigeeinrichtung 2 können beispielsweise folgende Texte als Abfrage 3 erscheinen: "Wurde im Stand-By-Modus die Tropfschale und/oder der Tresterbehälter geleert?", oder "Wurde im Stand-By-Modus die Brüheinheit entnommen?" oder generell "Wurden die Behälter geleert?". Im Bereich der Anzeigeeinrichtung 2 ist dabei zusätzlich ein "Ja"-Feld 8 sowie ein "Nein"-Feld 9 zur Beantwortung der Abfrage 3 angeordnet, welches entweder rein visuell als berührungssensitives Feld in der Anzeigeeinrichtung 2 angezeigt oder als separater Taster ausgebildet sein kann.

Bei einer Beantwortung der Abfrage 3 nach der Entnahme der Brüheinheit 6 mit einem "Nein" kann beispielsweise auf ein Initialisieren der Brüheinheit 6 verzichtet werden, wodurch der Kaffeeautomat 1 schneller betriebsbereit ist. In diesem Fall kann beispielsweise eine Position der Brüheinheit 6 vor dem Ausschalten bzw. vor dem Stand-By-Modus weiter verwendet werden. Hierdurch ist der Kaffeeautomat 1 schneller betriebsbereit und ein jeweiliger Benutzer bekommt schneller sein gewünschtes Getränk.

Das Öffnen bzw. Schließen der Gerätetür 7 kann beispielsweise mittels eines Türschalters 10, welcher datenübertragend mit einer Rechnereinrichtung 11 verbunden ist, erfasst werden. Die Rechnereinrichtung 11 ist dabei zur Durchführung des erfindungsgemäßen Verfahrens ausgebildet und zeigt entweder generell nach dem Wecken des Kaffeeautomaten 1 aus seinem Stand-By-Modus oder nach dem Einschalten desselben an der Anzeigeeinrichtung 2 die zuvor genannten Abfragen 3 an.

Mit dem erfindungsgemäßen Kaffeeautomaten 1 und dem erfindungsgemäßen Verfahren kann insbesondere auf bislang erforderliche Sensoren verzichtet werden und zudem eine Überwachung des Kaffeeautomaten 1 auch während seines Stand-By-Modus bzw. während seines ausgeschalteten Zustands erfolgen.

### Bezugszeichenliste

- 1: Kaffeeautomat
- 2: Anzeigeeinrichtung
- 3: Abfrage
- 4: Tropfschale
- 5: Tresterbehälter
- 6: Brüheinheit
- 7: Gerätetür
- 8: "Ja"-Feld
- 9: "Nein"-Feld
- 10: Türschalter
- 11: Rechnereinrichtung

## Patentansprüche

1. Verfahren zum Betreiben eines Kaffeeautomaten (1), bei dem nach einem Einschalten des Kaffeeautomaten (1) oder nach einem Wecken des Kaffeeautomaten (1) aus einem Stand-by-Modus an einer Anzeigeeinrichtung (2) eine Abfrage (3) nach einer Entleerung einer Tropfschale (4) und/oder eines Tresterbehälters (5) und/oder eine Abfrage (3) nach einer Entnahme einer Brüheinheit (6) angezeigt werden/wird.

2. Verfahren nach Anspruch 1, **dadurch gekennzeichnet, dass** nach einem Öffnen einer Gerätetür (7) an der Anzeigeeinrichtung (2) eine Abfrage nach der Entleerung der Tropfschale (4) und/oder des Tresterbehälters (5) und/oder eine Abfrage (3) nach der Entnahme der Brüheinheit (6) angezeigt werden/wird.

3. Verfahren nach Anspruch 1 oder 2, **dadurch gekennzeichnet, dass** die Abfrage (3) in einem Bedienmenü ausgeschaltet werden kann.

4. Verfahren nach einem der vorhergehenden Ansprüche, **dadurch gekennzeichnet, dass** in der Anzeigeeinrichtung (2) folgender Text als Abfrage (3) erscheint, "Wurde im Stand-by-Modus die Tropfschale (4) und/oder der Tresterbehälter (5) geleert?".

5. Verfahren nach einem der vorhergehenden Ansprüche, **dadurch gekennzeichnet, dass** in der Anzeigeeinrichtung (2) folgender Text als Abfrage (3) erscheint, "Wurde im Stand-by-Modus die Brüheinheit (6) entnommen?"

6. Verfahren nach einem der Ansprüche 1 bis 5, **dadurch gekennzeichnet, dass** an der Anzeigeeinrichtung (2) ein "Ja"-Feld (8) und ein "Nein"-Feld (9) zur Beantwortung der Abfrage (3) angezeigt werden.

7. Verfahren nach Anspruch 6, **dadurch gekennzeichnet, dass** bei einer Beantwortung der Abfrage (3) nach der Entnahme der Brüheinheit (6) mit "Nein" kein Initialisieren der Brüheinheit (6) erfolgt.

8. Verfahren nach Anspruch 6 oder 7, **dadurch gekennzeichnet, dass** bei einer Beantwortung der Abfrage (3) nach der Entnahme der Brüheinheit (6) mit "Nein" eine Position der Brüheinheit (6) vor dem Ausschalten oder dem Stand-by-Modus weiter verwendet wird.

9. Kaffeeautomat (1) mit einer Anzeigeeinrichtung (2) und einer Rechnereinrichtung (11), die zur Durchführung des Verfahrens nach einem der vorhergehenden Ansprüche ausgebildet ist.

10. Kaffeeautomat nach Anspruch 9, **dadurch gekennzeichnet, dass** ein Türschalter (10) vorgesehen ist.
